Europäisches Patentamt

European Patent Office

Office européen des brevets

(19)

(11) Veröffentlichungsnummer: **0 105 447**
**B1**

(12) **EUROPÄISCHE PATENTSCHRIFT**

(45) Veröffentlichungstag der Patentschrift:
19.11.87

(51) Int. Cl.⁴: **C 03 B 23/035,** C 03 B 23/03

(21) Anmeldenummer: 83109615.1

(22) Anmeldetag: 27.09.83

(54) Vorrichtung zum Biegen von warmen Glasscheiben.

(30) Priorität: 01.10.82 DE 3236400
07.01.83 DE 3300388

(43) Veröffentlichungstag der Anmeldung:
18.04.84 Patentblatt 84/16

(45) Bekanntmachung des Hinweises auf die Patenterteilung:
19.11.87 Patentblatt 87/47

(84) Benannte Vertragsstaaten:
AT BE CH FR GB IT LI LU NL SE

(56) Entgegenhaltungen:
DE - A - 2 119 699
DE - A - 3 109 149
DE - A - 3 113 409
DE - A - 3 113 410
DE - C - 1 010 245
US - A - 4 229 199
US - A - 4 229 200

(73) Patentinhaber: FLACHGLAS AKTIENGESELLSCHAFT,
Otto-Seeling-Promenade 10-14, D-8510 Fürth (DE)

(72) Erfinder: Derner, Paul, Dr., Schlüterstrasse 3,
D-4650 Gelsenkirchen (DE)
Erfinder: Eckardt, Rudolf, Am Lilienveen 12-2,
D-4230 Wesel (DE)
Erfinder: Neuendorf, Christoph, Grünstrasse 82 b,
D-4230 Wesel (DE)

(74) Vertreter: Andrejewski, Walter et al, Patentanwälte
Andrejewski, Honke & Partner
Postfach 10 02 54 Theaterplatz 3, D-4300 Essen 1 (DE)

## Beschreibung

Die Erfindung bezieht sich gattungsgemäss auf eine Vorrichtung zum Biegen von warmen Glasscheiben mit einem Rollenrost und einer über dem Rollenrost angeordneten Vakuumbiegeform, die in vertikaler Richtung relativ zueinander bewegbar sind, wobei eine zu biegende Glasscheibe auf dem Rollenrost bis unter die Vakuumbiegeform fahrbar und von der Vakuumbiegeform aufnehmbar ist. – Vakuumbiegeform bezeichnet eine Biegeform, die eine zu biegende Glasscheibe durch Unterdruck aufnehmen und die gebogene Glasscheibe durch Unterdruck festhalten kann. Die gebogene Glasscheibe ist mit Hilfe der Vakuumbiegeform selbst oder mit einer Hilfsvorrichtung z. B. in eine Vorspannstation einfahrbar. Eine Vakuumbiegeform ist im allgemeinen und im Rahmen der Erfindung in mehrere Kammern unterteilt. Die Anordnung und Steuerung sind z. B. so getroffen, dass diese Kammern bei der Aufnahme einer zu biegenden Glasscheibe von der Aufnahmekante her nacheinander zugeschaltet werden wie es die betrieblichen Verhältnisse verlangen. Man kann auf diese Weise sicherstellen, dass überall der Unterdruck herrscht, der erforderlich ist, um die Glasscheibe festzuhalten. Die Unterteilung in Kammern kann sowohl in Längsrichtung als auch in Querrichtung vorgenommen werden, was sich insbesondere dann empfiehlt, wenn die Vakuumbiegeform bei einem Biegevorgang nicht nur eine Glasscheibe, sondern deren mehrere aufzunehmen hat. Tatsächlich kann eine solche Vorrichtung im Rahmen der Erfindung sowohl gleichzeitig mehrere nebeneinander angeordnete Glasscheiben als auch nur eine biegen. Aus terminologischen Gründen wird im folgenden in bezug auf die Glasscheiben stets der Singular verwandt.

Bei der aus der DE-A-3 109 149 bekannten gattungsgemässen Vorrichtung ist die Vakuumbiegeform ihrerseits verformbar, nämlich gleichsam flexibel. Die zu biegende Glasscheibe ruht eben auf dem Rollenrost und wird von der ebenen Biegeform aufgenommen, die danach insgesamt verformt wird. Da die Vakuumbiegeform auf ihrer Unterseite die zu biegende Glasscheibe festhält, macht diese die Verformung der Vakuumbiegeform mit. Aufbau und Steuerung einer so aufgebauten Vorrichtung sind aufwendig. Darüber hinaus lässt sich nicht jede von der Praxis verlangte Gestalt der gebogenen Glasscheiben verwirklichen, weil die Vakuumbiegeform entsprechende Verformungen nicht zulässt. Insbesondere stört, dass beim Biegevorgang eine von der Vakuumbiegeform festgehaltene, zu biegende Glasscheibe fliesst, was zu optisch sichtbaren Dickenänderungen führen kann, die häufig unerwünscht sind.

Der Erfindung liegt die Aufgabe zugrunde, eine gattungsgemässe Vorrichtung so weiter auszubilden, dass bei der Biegung der Glasscheibe eine Verformung der Vakuumbiegeform nicht mehr erforderlich ist und dass die Glasscheibe beim Biegen störende Veränderungen nicht mehr erfährt.

Zur Lösung dieser Aufgabe lehrt die Erfindung, dass die Vakuumbiegeform zumindest längs des Randes der Glasscheibe starr die Form der gebogenen Glasscheibe aufweist, dass zumindest ein Teil des Rollenrostes und die Vakuumbiegeform relativ zueinander eine zusätzliche Bewegung ausführen können und dass beide Relativbewegungen so aufeinander abgestimmt sind, dass die zu biegende Glasscheibe von einem ersten Berührungsbereich ausgehend fortschreitend biegend an die Vakuumbiegeform anlegbar ist. In kinematischer Hinsicht wird der Biegevorgang so zu einem Abwälzvorgang.

Erfindungsgemäss ist die Gestaltung der Vakuumbiegeform der Form angepasst, die die zu biegende Glasscheibe nach dem Biegevorgang aufweisen soll. Ihre der Gestalt der gebogenen Glasscheibe entsprechend gekrümmte Unterseite kann allerdings mit Werkstoffen belegt sein, die ihrerseits nicht vollständig starr sind, Biegeformen, die als Abwälzformen gegenüber einem Abwälzwiderlager arbeiten sind an sich bekannt (DE-C-1 010 245), jedoch sind diese nicht als Vakuumbiegeformen ausgeführt. Sie arbeiten auch nicht gegenüber einem Rollenrost als Abwälzwiderlager, sondern gegenüber einem Tisch. Die zu biegende Glasscheibe muss umständlich einerseits an der Abwälzbiegeform klemmend befestigt und andererseits auch an dem Abwälzwiderlager festgehalten werden. Das alles ist nicht erforderlich, wenn nach der Lehre der Erfindung die Abwälzbiegeform als Vakuumbiegeform ausgebildet ist, wobei überraschenderweise ein Rollenrost als Abwälzwiderlager arbeiten kann, ohne dass der Biegevorgang irgendwelche Störungen erfährt, sich beispielsweise die Rollen des Rollenrostes oder Bereiche zwischen den Rollen des Rollenrostes in der gebogenen Glasscheibe, und sei es nur in Form von mikroskopischen Wellungen oder Schlieren, abbilden. Es versteht sich, dass der Biegevorgang abwälzend so geführt werden muss, wie es die Gestaltung der gebogenen Glasscheibe verlangt und wie folglich die Vakuumbiegeform unterseitig eingerichtet ist. Soll die zu biegende Glasscheibe lediglich einfach gekrümmt werden, z. B. eine zylindrische Krümmung erfahren, so ist die Abwälzbiegeform entsprechend gekrümmt und genügt ein Abwälzvorgang um eine entsprechende horizontale Achse. Wird nicht eine einfache Krümmung, sondern vielmehr eine doppelte Krümmung der gebogenen Glasscheibe verlangt, so muss die Vakuumbiegeform um zwei Krümmungsachsen abwälzend biegen, was nacheinander geschehen kann. Zur Herstellung von gebogenen Glasscheiben, die eine doppelte Krümmung aufweisen, kann jedoch auch mit einem Rollenrost gearbeitet werden, dessen Rollen in einer Richtung bereits gekrümmt sind, so dass mit Hilfe der Vakuumbiegeform der auf dem Rollenrost vorgekrümmten Glasscheiben nur noch die zweite Krümmung überlagert wird. Die im Rahmen der Erfindung erforderlichen Relativbewegungen zwischen Vakuumbiegeform und Rollenrost lassen sich mit den Hilfsmitteln der modernen Antriebs- und Steuerungstechnik ohne weiteres verwirklichen, was insoweit im einzelnen nicht der Beschreibung bedarf.

Sowohl in kinematischer Hinsicht als auch in konstruktiver Hinsicht lässt sich die Lehre der Erfindung auf verschiedene Weise verwirklichen. Eine Ausführungsform die sich durch Einfachheit auszeichnet, ist dadurch gekennzeichnet, dass Teile des Rollenrostes für die zusätzliche Bewegung gegenüber einem Rollenrostrahmen verstellbare Rollen aufweisen und dass die zu biegende Glasscheibe durch die verstellbaren Rollen an die Vakuumbiegeform biegend anlegbar ist, und zwar auch hierbei offenbar unter Abwälzung. Es versteht sich, dass bei dieser Ausführungsform die Vakuumbiegeform feststehen kann und die gesamte vertikale Bewegung von dem Rollenrost übernommen werden kann, – oder umgekehrt. Durch Einfachheit und Funktionssicherheit ausgezeichnet ist auch eine Ausführungsform, die dadurch gekennzeichnet ist, dass die zusätzliche Bewegung aus einer Abwälzbewegung des Rollenrostes gegenüber der beim Biegevorgang festen Vakuumbiegeform besteht. Auch hier steht also die Vakuumbiegeform fest, wenn sie auch zum Zwecke der Einleitung des Biegevorganges auf- und niederbewegt werden kann, die Abwälzbewegung wird jedoch vom Rollenrost übernommen. Ein anderer Vorschlag der Erfindung ist in diesem Zusammenhang dadurch gekennzeichnet, dass die zusätzliche Bewegung aus einer Abwälzbewegung der Vakuumbiegeform gegenüber dem beim Biegevorgang festen Rollenrost besteht. Man kann aber die Abwälzbewegung auch dadurch erzeugen, dass sich sowohl der Rollenrost als auch die Vakuumbiegeform gegeneinander abwälzend bewegen.

Auch die Gestaltung der Vakuumbiegeform selbst ist im Rahmen der Erfindung weitgehend beliebig. Insbesondere kann mit einer Vakuumbiegeform gearbeitet werden, die als der gebogenen Glasscheibe angepasste vollflächige Matrize oder Patrize (d.h. konkav oder konvex) ausgeführt ist. Die Vakuumbiegeform kann jedoch auch zu einem Rahmen entarten. Dabei ist die die Vakuumbiegeform als dem Rand der gebogenen Glasscheibe angepasster Vakuumrahmen ausgeführt. Hier besteht die Möglichkeit, dass eine von dem Vakuumrahmen aufgenommene Glasscheibe in ihrem zentralen Bereich durch den Einfluss der Schwerkraft und/oder durch mittels zentraler Druckkammer aufgebrachtem Unterdruck oder Überdruck weiterverformbar ist. Entsprechende Druckkammern, die mit Überdruck oder Unterdruck arbeiten, sind grundsätzlich bekannt (Bekanntmachungsunterlagen DE-Patentanmeldung K 22 178 X/39 A, DE-A-2 119 699), jedoch wird im Rahmen dieser bekannten Massnahmen mit einer festen Biegeform gearbeitet, während erfindungsgemäss die Glasscheibe nur von dem Vakuumrahmen als festes Widerlager gehalten und danach gleichsam im Wege des Freiform-Formens weiterverformbar ist. Gleichgültig, ob die Vakuumbiegeform als Vollmatrize oder Vollpatrize oder lediglich als Vakuumrahmen ausgeführt ist, wie bereits eingangs erwähnt besteht eine solche Vakuumbiegeform regelmässig aus einer Mehrzahl von separaten Vakuumabteilungen bzw. Vakuumabschnitten, deren Unterdruck unterschiedlich, z.B. nach Massgabe des Biege- und Abwälzvorganges, steuerbar ist.

Bezüglich der Gestaltung des Rollenrostes bestehen im Rahmen der Erfindung mehrere Möglichkeiten. Handelt es sich um zu biegende Glasscheiben, die sich zwischen den Rollen eines Rollenrostes leicht durchbiegen und die andererseits materialmässig und temperaturmässig so eingestellt sind, dass sich an der Vakuumbiegeform diese Durchbiegung nicht kompensiert, so lehrt die Erfindung, dass als Abwälzwiderlager ein Rollenrost verwendet ist, dessen Rollen beim Abwälzvorgang der Vakuumbiegeform gegenüber der zu biegenden Glasscheibe und damit gegenüber der Vakuumbiegeform eine hin- und hergehende Bewegung ausführen. Derartige Rollenroste sind an sich bekannt (DE-A-3 113 410, DE-A-3 113 409). Im Rahmen der Erfindung liegt es so vorzugehen, dass die zu biegende Glasscheibe gegenüber dem Fundament translatorisch bewegbar ist und dass die Vakuumbiegeform, und zwar mit ihrem Abwälzbiegezentrum, neben der Abwälzbewegung synchron mit der translatorisch bewegten Glasscheibe translatorisch bewegbar ist. Ferner kann man die Anordnung auch so treffen, dass die zu biegende Glasscheibe beim Biegevorgang gegenüber dem Fundament ruht und dass die Vakuumbiegeform ein Abwälzbiegezentrum aufweist, welches lediglich auf- und niederbewegbar ist, translatorisch aber mit der Glasscheibe ruht. Verwirklicht man die Ausführungsform der Erfindung, bei der ein Rollenrost verwendet wird, dessen Rollen beim Abwälzvorgang der Vakuumbiegeform gegenüber der zu biegenden Glasscheibe und damit auch gegenüber der Vakuumbiegeform eine hin- und hergehende Bewegung ausführen, so besteht eine bevorzugte Ausführungsform in der Kombination mit einem Rollenrost mit einer Mehrzahl von Rollen vom Radius R, wobei die Rollen an eine Antriebseinrichtung angeschlossen und gleichzeitig mit einer Transportwinkelgeschwindigkeit w(trans) und mit einer Transportwinkelgeschwindigkeit w(trans) überlagerten Oszillationswinkelgeschwindigkeit w(osc) antreibbar sind, so dass eine zu biegende Glasscheibe sich gegenüber dem Rollenrost mit der Glasscheibenrelativgeschwindigkeit Rw(trans) plus Rw(osc) bewegt, R gleich Radius der Rollen, und wobei ausserdem der Rollenrost mit einer Geschwindigkeit $v_R(osc)$ hin- und hergehend so antreibbar ist, dass die zu biegende Glasscheibe gegenüber dem Fundament in Ruhe ist.

Die erreichten Vorteile sind darin zu sehen, dass mit Hilfe der erfindungsgemässen Vorrichtung Glasscheiben, die im gebogenen Zustand eine einfache oder auch eine doppelte Krümmung aufweisen sollen, sehr einfach gebogen werden können, wobei mit einer Vakuumbiegeform gearbeitet wird, die bei der Biegung keine Verformung erfährt. Der Biegevorgang wird durch Abwälzen erzeugt und geschieht auf dem Rollenrost, mit dem die zu biegenden Glasscheiben der erfindungsgemässen Vorrichtung auch zugeführt worden sind. Das ermöglicht ein zügiges Arbeiten.

Darüber hinaus zeichnet sich die erfindungsgemässe Vorrichtung durch sehr enge Toleranzen in bezug auf die gebogenen Glasscheiben aus. Störende Verformungen treten nicht auf. Wie bereits erwähnt, kann der Abtransport der gebogenen Glasscheiben mit einer Hilfsvorrichtung geschehen, die die gebogene Glasscheibe von der Vakuumbiegeform abnimmt und z.B. einer Vorspannstation zuführt.

Im folgenden wird die Erfindung anhand einer lediglich ein Ausführungsbeispiel darstellenden Zeichnung erläutert. Es zeigen in schematischer Darstellung

Fig. 1 die Seitenansicht einer erfindungsgemässen Vorrichtung bei Beginn des Biegevorganges,

Fig. 2 den Gegenstand nach Fig. 1 während des Biegevorganges,

Fig. 3 den Gegenstand nach Fig. 1 am Ende des Biegevorganges,

Fig. 4 entsprechend der Fig. 1 eine andere Ausführungsform der erfindungsgemässen Vorrichtung vor Beginn des Biegevorganges,

Fig. 5 den Gegenstand nach Fig. 4 bei Beendigung des Biegevorganges,

Fig. 6 eine weitere Ausführungsform des Gegenstandes der Fig. 1 (Ausführungsform mit Biegerahmen),

Fig. 7 die Vorrichtung nach Fig. 1 mit weiteren Einzelheiten und

Fig. 8 einen vergrösserten Ausschnitt aus dem Gegenstand nach Fig. 7.

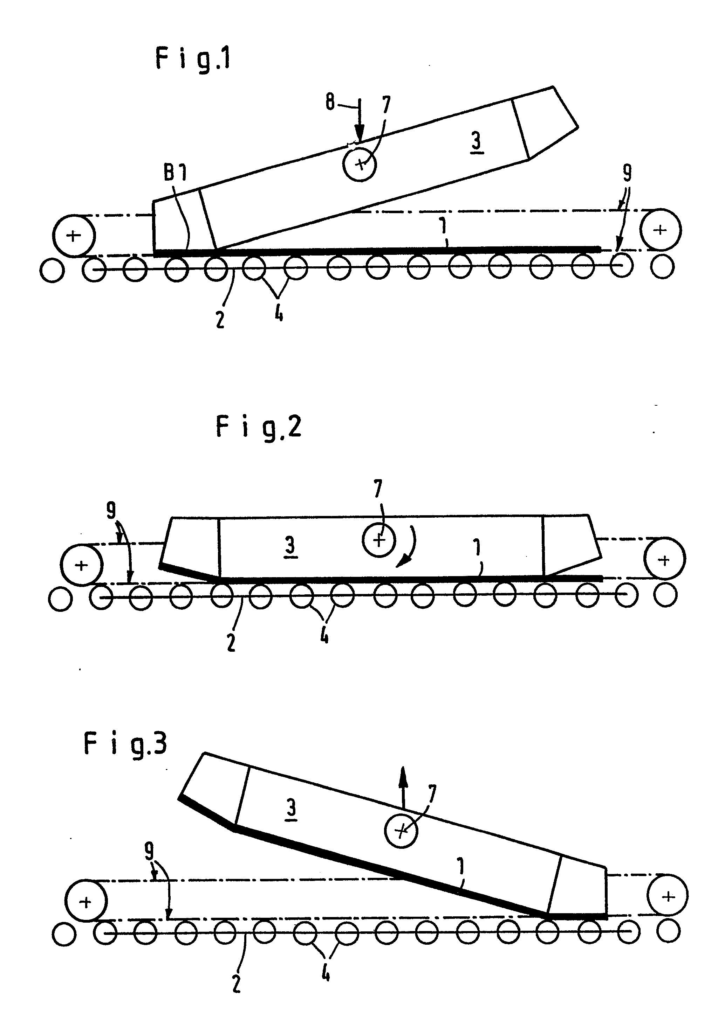

Die in den Figuren dargestellte Vorrichtung dient zum Biegen von warmen Glasscheiben 1. Zum grundsätzlichen Aufbau gehören

ein Rollenrost 2 und

eine Vakuumbiegeform 3,

wobei die Vakuumbiegeform 3 über dem Rollenrost 2 angeordnet ist. Eine zu biegende Glasscheibe 1 wird auf dem Rollenrost 2 bis unter die Vakuumbiegeform 3 gefahren und ist von der Vakuumbiegeform 3 aufnehmbar. Dabei wird sie, letzten Endes, durch einen Abwälzvorgang, gebogen. Die Vakuumbiegeform 3 weist zumindest längs des Randes der Glasscheibe 1 starr die Form der gebogenen Glasscheibe 1 auf und die Anordnung ist stets so getroffen, dass die Vakuumbiegeform 3 sowie der Rollenrost 2 relativ zueinander bewegbar sind, wobei durch diese Relativbewegung die zu biegende Glasscheibe 1 an die Vakuumbiegeform 3 fortschreitend abwälzend anlegbar ist, und zwar von einem ersten Berührungsbereich B1 ausgehend. Das entnimmt man aus einer vergleichenden Betrachtung der Fig. 1 bis 3. Man erkennt, dass hier die Vakuumbiegeform 3 gegenüber dem beim Biegevorgang festen Rollensrost 2 als Abwälzwiderlager, unter Zwischenschaltung der zu biegenden Glasscheibe 1, abwälzbewegbar ist. Es versteht sich von selbst, dass auch die kinematische Umkehr der anhand der Fig. 1 bis 3 erläuterten Ausführungsform zu einem Biegen durch Abwälzen führt, wobei dann der Rollenrost 2 gegenüber der beim Biegevorgang festen Vakuumbiegeform 3 als Abwälzwiderlager, unter Zwischenschaltung der zu biegenden Glasscheibe 1 abwälzbar anzuordnen ist.

Im Ausführungsbeispiel aller Figuren ist die Vakuumbiegeform 2 einfach gekrümmt dargestellt worden, die dargestellten Vorrichtungen dienen also zum Biegen von einfach gekrümmten Glasscheiben 1 und die Abwälzbewegung ist eine einachsige Abwälzbewegung. Die Vakuumbiegeform 3 könnte jedoch auch doppelt gekrümmt sein und dadurch zur Herstellung von sphärisch gekrümmten Glasscheiben 1 eingerichtet sein, wobei der Abwälzbewegung, die in den Figuren erläutert wurde eine zweite Abwälzbewegung um eine zur dargestellten Abwälzbewegung orthogonale Abwälzachse zu überlagern ist. – Das alles lässt sich mit den Hilfsmitteln der modernen Antriebs- und Steuerungstechnik ohne Schwierigkeiten verwirklichen, wozu auf die bei sogenannten Industrierobotern übliche Technologie verwiesen wird.

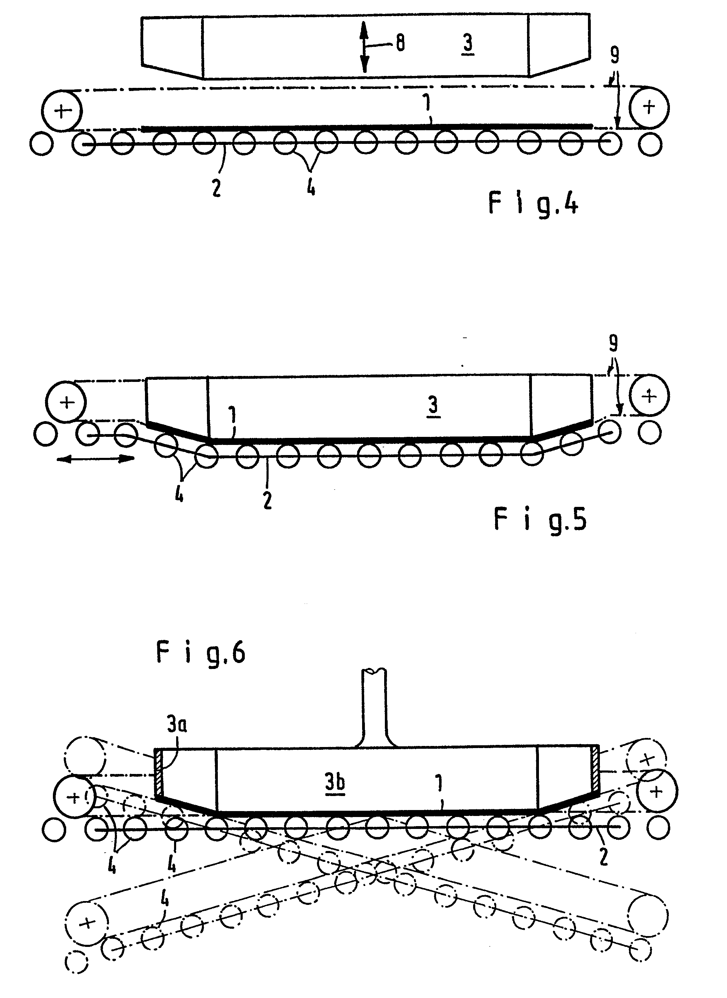

In der Ausführungsform nach den Fig. 1 bis 5 ist die Vakuumbiegeform 3 eine der gebogenen Glasscheibe 1 angepasste vollflächige Patrize. Bei der Ausführungsform nach Fig. 6 ist die Vakuumbiegeform 3 als dem Rand der gebogenen Glasscheibe 1 angepasster Vakuumrahmen 3a ausgeführt. Man erkennt, dass eine von dem Vakuumrahmen 3a aufgenommene Glasscheibe 1 in ihrem zentralen Bereich durch den Einfluss von Unterdruck oder Überdruck, der mittels einer zentralen Druckkammer 3b erzeugt wird, im Wege des Freiform-Formens weiterverformt werden kann. Der Vakuumrahmen 3a könnte nach Aufnehmen der Glasscheibe 1 in sich verformbar sein.

Der besonderen Behandlung bedarf der Rollenrost 2, mit dem in den Ausführungsbeispielen gearbeitet wird. Aus Gründen der Deutlichkeit wurde in der Vorrichtung nur eine Glasscheibe 1 gezeichnet. Der Rollenrost 2 weist eine Mehrzahl von Rollen 4 vom Radius R auf. Es versteht sich von selbst, dass dem Rollenrost 2 andere Transporteinrichtungen, beispielsweise ebenfalls in Form von Rollgängen, vorgeschaltet und/oder nachgeschaltet sind. Die Rollen 4 können auch beheizte oder gekühlte Rollen 4 oder mit Kühleinrichtung kombiniert sein.

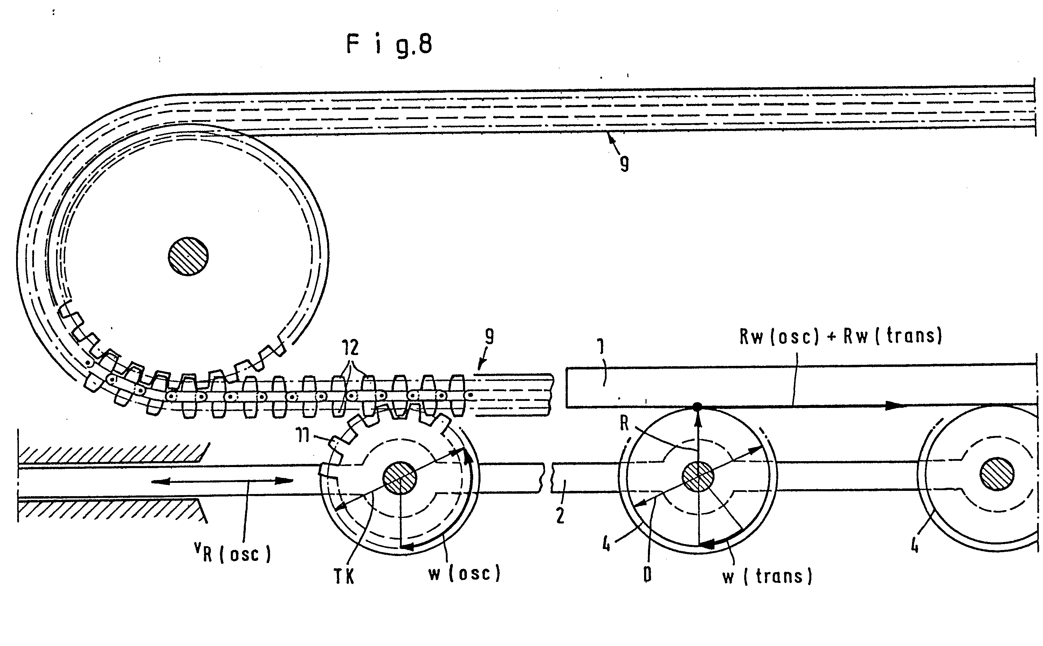

Im Ausführungsbeispiel ist die Anordnung so getroffen, dass die Rollen 4 des Rollenrostes 2 gegenüber der Glasscheibe 1 eine hin- und hergehende Bewegung ausführen. Dazu sind die Rollen 4 an eine Antriebseinrichtung 5, 6 angeschlossen und mit einer Oszillationswinkelgeschwindigkeit w(osc) synchron antreibbar, – welche Geschwindigkeiten in Fig. 8 bei verschiedenen Rollen 4 durch Bogenpfeil verdeutlicht sind.

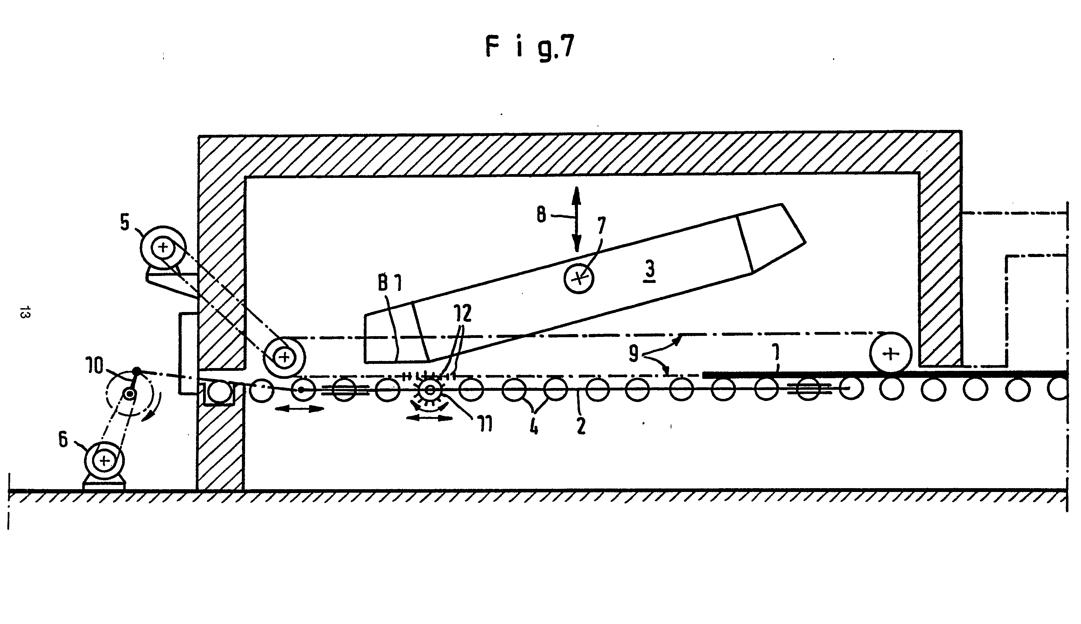

Oberhalb dieses Rollenrostes 2 sind die Vakuumbiegeformen 3 angeordnet. Aus einer vergleichenden Betrachtung der Fig. 1 bis 3 sowie 6 und 7 entnimmt man, dass die Vakuumbiegeform 3 um eine horizontale Achse als Abwälzbiegezentrum 7 schwenkbar sowie mit der horizontalen Achse als Abwälzbiegezentrum 7 auf den Rollenrost 2 zu und von diesem weg heb- und senkbar ist. Das ist durch den Pfeil 8 angedeutet worden. Das ermöglicht es, eine Glasscheibe 1 in der Vorrichtung zu biegen, wie weiter oben anhand der Fig. 1 bis 3 erläutert wurde. Anhand der Fig. 7 und 8 werden die kinematischen Zusammenhänge erläutert: Die Anordnung ist so getroffen, dass die Rollen 4 gleichzeitig mit der Transportwinkelgeschwindigkeit w(trans) und mit der der Transportwinkelgeschwindigkeit w(trans) überlagerten Oszillationswinkelgeschwindigkeit w(osc) antreibbar sind. Das hat zur Folge, dass die Glasscheibe 1 sich gegenüber dem Rollenrost 2 mit einer Glasscheibenrelativgeschwindigkeit Rw(trans) plus Rw(osc) bewegt. Ausserdem ist aber der Rollenrost 2 mit einer Geschwindigkeit $v_R$(osc) hin- und hergehend antreibbar. Im Ausführungsbeispiel und nach bevorzugter Ausführungsform der Erfindung ist die Anordnung so getroffen, dass die translatorische Geschwindigkeit $v_R$(osc) dem Betrage nach stets ebenso gross ist wie die Oszillationskomponente Rw(osc) der Glasscheibenrelativgeschwindigkeit gegenüber dem Rollenrost 2, jedoch ist sie entgegengesetzt gerichtet. Anders ausgedrückt gilt die Beziehung $v_R$(osc) = Rw(osc). Die Antriebseinrichtung 5, 6 für die Rollen 4 und für den Rollenrost 2 ist im Ausführungsbeispiel eine vollmechanische Antriebseinrichtung. Zu dieser Antriebseinrichtung für die Rollen 4 gehört ein gleichzeitig umlaufender Kettentrieb 9, dessen Umlaufgeschwindigkeit der Transportkomponente Rw(trans) der Glasscheibenrelativgeschwindigkeit entspricht oder proportional ist. Der Rollenrost 2 ist an einen zusätzlichen Antrieb 6 für seine hin- und hergehende Bewegung der Geschwindigkeit $v_R$(osc) angeschlossen. Dadurch ist die Oszillationskomponente Rw(osc) der Glasscheibenrelativgeschwindigkeit von der hin- und hergehenden translatorischen Bewegung des Rollenrostes 2 abgeleitet. Im Ausführungsbeispiel erfolgt der Antrieb des Kettentriebs 9 beispielsweise über einen Gleichstrommotor 5, der zur Einstellung der Transportwinkelgeschwindigkeit und damit der Transportgeschwindigkeitskomponente Rw(trans) bezüglich seiner Drehzahl einstellbar ist. Der Antrieb für die translatorische, hin- und hergehende Bewegung $v_R$(osc) des Rollenrostes 2 erfolgt im Ausführungsbeispiel über einen Kurbeltrieb 10, der ebenfalls an einen Elektromotor 6 angeschlossen ist. Es erfolgt eine verhältnismässig schnelle Oszillation. Die Rollen 4 weisen Antriebsritzel 11 auf, die mit entsprechenden Zahnausbildungen 12 des Kettentriebes 9 kämmen. Angedeutet wurde in der Fig. 8, dass die Antriebsritzel 11 einen Teilkreisdurchmesser TK aufweisen, der mit dem Rollendurchmesser D übereinstimmt, – während die Rollen 4 an der Unterseite der zu behandelnden Glasscheiben 1 sich abwälzen.

## Patentansprüche

1. Vorrichtung zum Biegen von warmen Glasscheiben (1) mit einem Rollenrost (2) und einer über dem Rollenrost (2) angeordneter Vakuumbiegeform (3), die in vertikaler Richtung relativ zueinander bewegbar sind, wobei eine zu biegende Glasscheibe (1) auf dem Rollenrost (2) bis unter die Vakuumbiegeform (3) fahrbar und von der Vakuumbiegeform (3) aufnehmbar ist, dadurch gekennzeichnet, dass die Vakuumbiegeform (3) zumindest längs des Randes der Glasscheibe (1) starr die Form der gebogenen Glasscheibe (1) aufweist, dass zumindest ein Teil des Rollenrostes (2) und die Vakuumbiegeform (3) relativ zueinander eine zusätzliche Bewegung ausführen können und dass beide Relativbewegungen so aufeinander abgestimmt sind, dass die zu biegende Glasscheibe (1) von einem ersten Berührungsbereich (B1) ausgehend fortschreitend biegend an die Vakuumbiegeform (3) anlegbar ist.

2. Vorrichtung nach Anspruch 1, dadurch gekennzeichnet, dass Teile des Rollenrostes (2) für die zusätzliche Bewegung gegenüber einem Rollenrostrahmen verstellbare Rollen (4) aufweisen und dass die zu biegende Glasscheibe (1) durch diese verstellbaren Rollen (4) an die Vakuumbiegeform (3) biegend anlegbar ist.

3. Vorrichtung nach Anspruch 1, dadurch gekennzeichnet, dass die zusätzliche Bewegung aus einer Abwälzbewegung des Rollenrostes (2) gegenüber der beim Biegevorgang festen Vakuumbiegeform (3) besteht.

4. Vorrichtung nach Anspruch 1, dadurch gekennzeichnet, dass die zusätzliche Bewegung aus einer Abwälzbewegung der Vakuumbiegeform (3) gegenüber dem beim Biegevorgang festen Rollenrost (2) besteht.

5. Vorrichtung nach einem der Ansprüche 1 bis 4, dadurch gekennzeichnet, dass die Vakuumbiegeform (3) einfach gekrümmt und dadurch zum Biegen von einfach gekrümmten Glasscheiben (1) eingerichtet ist.

6. Vorrichtung nach einem der Ansprüche 1 bis 4, dadurch gekennzeichnet, dass die Vakuumbiegeform (3) doppelt gekrümmt und dadurch zur Herstellung von sphärisch gekrümmten Glasscheiben (1) eingerichtet ist.

7. Vorrichtung nach einem der Ansprüche 1 bis 6, dadurch gekennzeichnet, dass die Vakuumbiegeform (3) als der gebogenen Glasscheibe (1) angepasste vollflächige Matrize oder Patrize ausgeführt ist.

8. Vorrichtung nach einem der Ansprüche 1 bis 6, dadurch gekennzeichnet, dass die Vakuumbiegeform (3) als dem Rand der gebogenen Glasscheibe (1) angepasster Vakuumrahmen (3a) ausgeführt ist.

9. Vorrichtung nach Anspruch 8, dadurch gekennzeichnet, dass eine von dem Vakuumrahmen (3a) aufgenommene Glasscheibe (1) in ihrem zentralen Bereich durch den Einfluss der Schwerkraft und/oder durch mittels zentraler Druckkammer aufgebrachten Unterdruck oder Überdruck weiterverformbar ist.

10. Vorrichtung nach einem der Ansprüche 1 bis 9, dadurch gekennzeichnet, dass die Vakuumbiegeform (3) bzw. der Vakuumrahmen (3a) aus einer Mehrzahl von separaten Vakuumabteilungen bzw. Vakuumabschnitten besteht, deren Unterdruck unterschiedlich steuerbar ist.

11. Vorrichtung nach einem der Ansprüche 1 sowie 4 bis 10, dadurch gekennzeichnet, dass als Abwälzwiderlager ein Rollenrost (2) verwendet ist, dessen Rollen (4) beim Abwälzvorgang der Vakuumbiegeform (3) gegenüber der zu biegenden Glasscheibe (1) und damit gegenüber der Vakuumbiegeform (3) eine hin- und hergehende Bewegung ausführen.

12. Vorrichtung nach einem der Ansprüche 1 sowie 4 bis 10, dadurch gekennzeichnet, dass die zu biegende Glasscheibe (1) gegenüber dem Fundament translatorisch bewegbar ist und dass die Vakuumbiegeform (3) insgesamt, und zwar mit ihrem Abwälzbiegezentrum (7), neben der Abwälzbewegung synchron mit der translatorisch bewegten Glasscheibe (1) translatorisch bewegbar ist.

13. Vorrichtung nach einem der Ansprüche 1 bis 11, dadurch gekennzeichnet, dass die zu biegende Glasscheibe (1) beim Biegevorgang gegenüber dem Fundament ruht und dass die Vakuumbiegeform (3) ein Abwälzbiegezentrum (7) aufweist, welches lediglich auf- und niederbewegbar ist, translatorisch aber mit der Glasscheibe ruht.

14. Vorrichtung nach einem der Ansprüche 11 oder 13, gekennzeichnet durch einen Rollenrost (2) mit einer Mehrzahl von Rollen (4) vom Radius R, wobei die Rollen (4) an einer Antriebseinrichtung (5, 6) angeschlossen und gleichzeitig mit einer Transportwinkelgeschwindigkeit w(trans) und mit einer der Transportwinkelgeschwindigkeit überlagerten Oszillationswinkelgeschwindigkeit w(osc) antreibbar sind, so dass eine zu biegende Glasscheibe (1) sich gegenüber dem Rollenrost (2) mit der Glasscheibenrelativgeschwindigkeit Rw(trans) plus Ew(osc) bewegt, R gleich Radius der Rollen, und wobei ausserdem der Rollenrost (2) mit einer Geschwindigkeit $V_R$(osc) hin- und hergehend so antreibbar ist, dass die zu biegende Glasscheibe (1) gegenüber dem Fundament in Ruhe ist.

## Claims

1. Equipment for bending hot glass sheets (1), with a roller conveyor (2) and a vacuum bending die (3) located above it that are movable in a vertical direction relatively to one another, in which a glass sheet (1) that is to be bent is moveable along the roller conveyor (2) until it is below the vacuum bending die (3) and can be picked up by the vacuum bending die (3), characterised in that at least along the edge of the glass sheet (1) the vacuum bending die (3) rigidly presents the shape of the bent glass sheet (1), that at least a part of the roller conveyor (2) and the vacuum bending die (3) can execute an additional movement relatively to one another, and that both relative movements are so related to one another that the glass sheet (1) that is to be bent can, starting from a first contact area (B1), be progressively applied with bending to the vacuum bending die (3).

2. Equipment according to Claim 1, characterised in that, for the additional movement, parts of the roller conveyor (2) possess rollers (4) that are adjustable relatively to a roller conveyor frame and that the glass sheet (1) that is to be bent can be applied with bending to the vacuum bending die (3) by these adjustable rollers (4).

3. Equipment according to Claim 1, characterised in that the additional movement consists of a rolling-back movement of the roller conveyor (2) against the stationary vacuum bending die (3).

4. Equipment according to Claim 1, characterised in that the additional movement consists of a rolling-back movement of the vacuum bending die (3) against the stationary roller conveyor (2).

5. Equipment according to one of Claims 1 to 4, characterised in that the vacuum bending die (3) has a single curvature and is thereby suitable for bending glass sheets (1) that are curved in one plane only.

6. Equipment according to one of Claims 1 to 4, characterised in that the vacuum bending die (3) has double curvature and is thereby suitable for producing glass sheets (1) that have a spherical curvature.

7. Equipment according to one of Claims 1 to 6, characterised in that the vacuum bending die (3) is constructed as a male or female die fitting the whole surface of the bent glass sheet (1).

8. Equipment according to one of Claims 1 to 6, characterised in that the vacuum bending die (3) is constructed as a vacuum frame (3a) fitting the edge of the bent glass sheet (1).

9. Equipment according to Claim 8, characterised in that the central area of a glass sheet (1) picked up by the vacuum frame (3a) is further deformable by the effect of gravity and/or by a reduced pressure or an excess pressure applied to a central pressure chamber.

10. Equipment according to one of Claims 1 to 9, characterised in that the vacuum bending die (3) or vacuum frame (3a) consists of a plurality of separate vacuum compartments or sectors, the reduced pressure of which is individually controllable.

11. Equipment according to Claim 1 and one of Claims 4 to 10, characterised in that a roller conveyor (2) is employed as rolling-back buttress, the rolls (4) of which during the rolling-back procedure execute a to-and-fro movement relatively to the glass sheet (1) that is to be bent and at the same time relatively to the vacuum bending die (3).

12. Equipment according to Claim 1 and one of Claims 4 to 10, characterised in that the glass sheet (1) that is to be bent is movable with translatory movement relatively to the baseplate of the equipment, and that the vacuum bending die (3) as a whole is movable, namely by its roll-back bend centre (7), with translatory movement in addition to the roll-back movement, in synchronism with the translatory movement of the glass sheet (1).

13. Equipment according to one of Claims 1 to 11, characterised in that the glass sheet (1) that is to be bent is stationary relatively th the baseplate of the equipment during the bending procedure and that the vacuum bending die (3) possesses a roll-back bend centre (7) that is movable merely upwards and downwards but as regards translatory movement ist, with the glass sheet, stationary.

14. Equipment according to one of Claims 11 or 13, characterised by a roller conveyor (2) with a plurality of rollers (4) of radius R, in which the rollers (4) are connected to a driving mechanism (5, 6) and are drivable simultaneously at a transportation angular velocity w(trans) and at an oscillatory angular velocity w(osc) superimposed upon the transportation angular velocity, so that a glass sheet (1) that is to be bent moves relatively to the roller conveyor (2) at the glass sheet relative velocity Rw(trans) + Rw(osc), where R is the roller radius, and in which the roller conveyor (2) is also drivable to and fro at a velocity $V_R(osc)$ in such a way that the glass sheet (1) that is to be bent is stationary relatively to the baseplate of the equipment.

## Revendications

1. Dispositif pour cintrer des feuilles de verre chaudes (1), comportant une grille à rouleaux (2) et une forme de cintrage à dépression (3) disposée au-dessus de la grille à rouleaux (2), la grille et la forme étant déplaçables verticalement l'une par rapport à l'autre, et dans lequel une feuille de verre (1) devant être cintrée peut être déplacée sur la grille à rouleaux (2) en étant amenée jusqu'au-dessous de la forme de cintrage à dépression (3) et peut être saisie par cette forme de cintrage à dépression (3), caractérisé en ce que la forme de cintrage à dépression (3) possède, au moins le long du bord de la feuille de verre (1), la forme rigide de la feuille de verre (1) cintrée, qu'au moins une partie de la grille à rouleaux (2) et la forme de cintrage à dépression (3) peuvent exécuter un déplacement supplémentaire l'une par rapport à l'autre et que les deux déplacements relatifs sont accordés l'un sur l'autre de telle sorte que la feuille de verre (1) devant être cintrée peut être appliquée progressivement à partir de la première zone de contact (B1), en se cintrant, contre la forme de cintrage à dépression (3).

2. Dispositif selon la revendication 1, caractérisé en ce que des parties de la grille à rouleaux (2) possèdent, pour le déplacement supplémentaire, des rouleaux (4) réglables par rapport à un cadre de grille à rouleaux et que la feuille de verre (1) devant être cintrée peut être appliquée, en se cintrant, par ces rouleaux réglables (4) contre la forme de cintrage à dépression (3).

3. Dispositif selon la revendication 1, caractérisé en ce que le déplacement supplémentaire est constitué par un déplacement de roulement de la grille à rouleaux (2) par rapport à la forme de cintrage à dépression (3), qui est fixe lors de l'opération de cintrage.

4. Dispositif selon la revendication 1, caractérisé en ce que le déplacement supplémentaire est constitué par un déplacement de roulement de la forme de cintrage à dépression (3) par rapport à la grille à rouleaux (2) fixe lors de l'opération de cintrage.

5. Dispositif selon l'une des revendications 1 à 4, caractérisé en ce que la forme de cintrage à dépression (3) possède un cintrage unique et est agencée de ce fait de manière à cintrer des feuilles de verre (1) possédant un cintrage simple.

6. Dispositif selon l'une des revendications 1 à 4, caractérisé en ce que la forme de cintrage à dépression (3) possède un cintrage double et est agencée de ce fait pour former des feuilles de verre (1) possédant un cintrage sphérique.

7. Dispositif selon l'une des revendications 1 à 6, caractérisé en ce que la forme de cintrage de dépression (3) est réalisée sous la forme d'une matrice ou d'un poinçon s'étendant sur toute la surface et adapté à la feuille de verre (1) cintrée.

8. Dispositif selon l'une des revendications 1 à 6, caractérisé en ce que la forme de cintrage à dépression (3) est réalisée sous la forme d'un cadre à dépression (3a) adapté au bord de la feuille de verre (1) cintrée.

9. Dispositif selon la revendication 8, caractérisé en ce que la déformation d'une feuille de verre (1) saisie par le cadre à dépression (3a) peut se poursuivre dans sa zone centrale sous l'influence de la force de pesanteur et/ou par l'application d'une dépression ou d'une surpression, réalisée à l'aide d'une chambre centrale de pression

10. Dispositif selon l'une des revendications 1 à 9, caractérisé en ce que la forme de cintrage à dépression (3) ou le cadre à dépression (3a) est constituée par une multiplicité de compartiments séparés à dépression ou de sections séparées à dépression, dans lesquelles la dépression peut être commandée différemment.

11. Dispositif selon l'une des revendications 1 et 4 à 10, caractérisé en ce qu'on utilise comme support de roulement une grille à rouleaux (2), dont les rouleaux (4) exécutent, lors de l'opération de roulement de la forme de cintrage à dépression (3), un déplacement en va-et-vient par rapport à la feuille de verre (1) devant être cintrée et par conséquent par rapport à la forme de cintrage à dépression (3).

12. Dispositif selon l'une des revendications 1 et 4 à 10, caractérisé en ce que la feuille de verre (1) devant être cintrée est déplaçable en translation par rapport au châssis et qu'en dehors du déplacement de roulement, la forme de cintrage à dépression (3) est déplaçable globalement, et ce avec son centre (7) de cintrage par roulement, en synchronisme avec la feuille de verre (1) déplacée en translation.

13. Dispositif selon l'une des revendications 1 à 11, caractérisé en ce que la feuille de verre (1) devant être cintrée est en repos par rapport au châssis lors de l'opération de cintrage et que la forme de cintrage à dépression (3) comporte un centre (7) de cintrage par roulement, qui est simplement déplaçable verticalement en va-et-vient, mais est au repos en translation avec la feuille de verre.

14. Dispositif selon l'une des revendications 11 ou 13, caractérisé par une grille à rouleaux (2) comportant une multiplicité de rouleaux (4) possédant un rayon R, les rouleaux (4) étant raccordés à un dispositif d'entraînement (5, 6) et pouvant être entraînés simultanément à une vitesse angulaire d'entraînement w(trans) et avec une vitesse d'oscillation w(osc), superposée à la vitesse angulaire d'entraînement, de sorte qu'une feuille de verre (1) devant être cintrée se déplace par rapport à la grille à rouleaux (2) à la vitesse relative de la feuille de verre Rw(trans) plus Rw(osc), R étant égal au rayon des rouleaux, et dans lequel en outre la grille à rouleaux (2) peut être entraînée en va-et-vient à une vitesse $V_R(osc)$ de telle sorte que la feuille de verre (1) devant être cintrée est au repos par rapport au châssis.

# Fig.1

# Fig.2

# Fig.3

F i g.4

F i g.5

F i g.6

# F i g.7

# F i g. 8

$v_R$ ( osc )

$^v$R ( osc )

TK    w ( osc )

Rw ( osc ) + Rw ( trans )

R

D    w ( trans )

0 105 447